# DEMANDE DE BREVET EUROPEEN

(11) **EP 3 079 076 A1**
(43) Date de publication de la demande: **12.10.2016**
(21) Numéro de dépôt: 16164332.5
(22) Date de dépôt: 07.04.2016
(51) Int. Cl.: G06F 17/27, G06F 17/30, G06Q 30/02

(54) **PROCÉDÉ DE DÉTERMINATION D'UN GAP SÉMANTIQUE, DISPOSITIF ET PROGRAMME CORRESPONDANT**

(30) Priorité: 10.04.2015 FR 1553159
(71) Demandeur: Pixalione, 92100 Boulogne (FR)
(72) Inventeur: ALIZON, Fabrice, 75015 Paris (FR); GIARIKANI, Antonia, 92100 Boulogne-Billancourt (FR)
(74) Mandataire: Vidon Brevets & Stratégie

(57) **Abrégé**

L'invention se rapporte à un procédé, mis en oeuvre par l'intermédiaire d'un dispositif électronique, de détermination d'une différence entre un contenu à optimiser (CntO) et un ensemble de contenus de référence (Cnt1,..., CntN), lesdits contenus de référence étant réunis au sein d'un corpus (COR). Un tel procédé comprend :
la création (20) de champs contextuels (ChTxt0, ChTxt1,...,ChTxtN, ChtTxtX), répartis en un champ contextuel (ChTxt0) du contenu à optimiser (CntO), au moins un champ contextuel (ChTxt1,...,ChTxtN) correspondant à au moins un contenu de référence (Cnt1,..., CntN) et un champ contextuel global (ChtTxtX) obtenu à partir d'au moins un contenu de référence (Cnt1,..., CntN) réuni au sein d'un contenu global, chaque champ contextuel (ChTxt0, ChTxt1,...,ChTxtN, ChtTxtX) comprenant au moins un ensemble de sommets deux-à-deux adjacents dénommé clique, chaque sommet comprenant un mot et chaque relation entre mot étant représentative d'une signification ;
le calcul (30) d'un gap sémantique (GapS) sur la base des champs contextuels (ChTxt0, ChTxt1,...,ChTxtN, ChtTxtX) créés.

## Description

### 1. Domaine

La technique proposée se rapporte au domaine des traitements d'optimisation de données. La technique proposée se rapporte plus particulièrement aux traitements d'optimisation d'indexation de contenus mis à disposition au sein des réseaux de communication. La technique proposée se rapporte encore plus spécifiquement à l'optimisation de l'indexation de contenus par des moteurs de recherche.

### 2. Art Antérieur

Il est indéniable que les moteurs de recherche jouent un rôle de prépondérant dans la manière dont les personnes accèdent à l'information depuis un navigateur internet ou depuis un smartphone ou une tablette. Avant même l'accès réel à un site internet ou à un contenu, un moteur de recherche intervient généralement pour fournir un certain nombre de résultats de recherche à un utilisateur. Cet utilisateur, au préalable, a transmis une requête au moteur de recherche (requête textuelle ou requête vocale). Le moteur de recherche analyse cette requête et fournit des résultats en fonction des mots clés de cette requête.

Bien entendu, les résultats obtenus sont classés du plus pertinents au moins pertinents (selon le moteur de recherche). Il est bien connu que le moteur de recherche "réserve" des places de choix à des résultats dits sponsorisés, c'est à dire des résultats fournis par le moteur de recherche sous la forme d'une prestation commerciale. De plus en plus, d'ailleurs, la manière dont les résultats de recherche sont affichés est remise en cause et les pratiques commerciales des moteurs de recherche sont considérées comme douteuses.

En fonctionnement nominal, un moteur de recherche fournit une réponse à une requête comprenant des mots clefs. Afin qu'un moteur de recherche puisse définir les résultats plus pertinents de la requête, il identifie et évalue toutes les pages web de tous les sites disponibles en fonction de nombreux critères qui peuvent être classé en trois grandes catégories : la technique, le contenu, et les liens (internes ou externes) de chaque site Internet. L'optimisation d'un site Internet dans les moteurs de recherche, donc, dépend de ces trois grandes catégories.

Ainsi, pour pouvoir ressortir dans les résultats naturels (i.e. non sponsorisés ou monnayés) fournis par un moteur de recherche, un contenu doit être référencé correctement. Dans la présente on s'intéresse aux mots clés qui sont utilisés pour référencer les contenus. Dans le cas d'un contenu web classique (par exemple un contenu HTML) les mots clés sont spécifiquement choisis pour pouvoir correspondre à des requêtes probables. On considère que la richesse sémantique d'une page web est, pour une part significative, responsable d'un bon positionnement dans des résultats de recherche pour le mot clé qui caractérise cette page. On considère également que les résultats fournis par un moteur de recherche ne sont généralement pas lus au-delà de la deuxième page. Ceci implique que le choix des mots qui sont utilisés dans une page influe de manière très importante pour déterminer la visibilité de ce contenu dans les résultats de recherche.

Dans la technique actuelle, le référencement par mots clés consiste essentiellement en un choix manuel de mots à insérer dans un entête de contenus. Le choix des mots est souvent effectué par une personne physique. Ce choix est effectué empiriquement ou par le biais de processus plus élaborés. Par exemple, un utilisateur peut choisir des mots en fonction des mots qui sont choisis par ses concurrents en termes d'activité commerciales ou en termes de résultats de recherche. Identifier et sélectionner les mots clés qui représentent un contenu est difficile. En effet, il s'agit d'une procédure très chronophage, qui est limitée en termes de volumétrie. Les mécanismes actuels, et plus particulièrement l'identification à la main des mots clés ne permettent pas de traiter de grands volumes de données. Par ailleurs, les systèmes actuels peinent à réaliser des analyses sémantiques correctes. Il existe donc un besoin de fournir une méthode et un système qui permettent de traiter de grands volumes de données, tout en étant pertinents sur le choix des mots clés représentants un contenu.

### 3. Résumé

La technique proposée ne présente pas ces inconvénients de l'art antérieur. Plus particulièrement, la technique proposée se rapporte à un procédé, mis en oeuvre par l'intermédiaire d'un dispositif électronique, de détermination d'une différence entre un contenu à optimiser et d'un ensemble de contenus de référence, lesdits contenus de référence étant réunis au sein d'un corpus. Un tel procédé comprend les étapes suivantes :
- création de champs contextuels, répartis en un champ contextuel du contenu à optimiser, au moins un champ contextuel correspondant à au moins un contenu de référence et un champ contextuel global obtenu à partir d'au moins un contenu de référence réuni au sein d'un contenu global, chaque champ contextuel comprenant au moins un ensemble de sommets deux-à-deux adjacents dénommé clique, chaque sommet comprenant un mot et chaque relation entre mot étant représentative d'une signification ;
- calcul d'un gap sémantique sur la base des champs contextuels créés.

Ainsi, à l'aide de champs contextuels, traduisant une certaine signification des mots de contenus, il est possible de traiter, de manière beaucoup plus rapide et efficace des ensembles de contenus similaires afin d'améliorer le référencement d'un contenu à optimiser.

Selon une caractéristique particulière, ledit procédé comprend, préalablement à l'étape de création des champs contextuels, une étape de détection d'une langue dudit contenu à optimiser, ladite étape de détection délivrant en outre une pluralité de paramètres de création des champs contextuels.

Selon une caractéristique particulière, l'étape de détermination comprend les étapes suivantes :
- création d'un champ contextuel du contenu à optimiser ;
- création d'un champ contextuel de chaque élément du corpus, N représentant le nombre d'éléments du corpus ;
- création d'un champ contextuel du corpus dans son ensemble.

Selon une caractéristique particulière, la création des champs contextuels comprend, pour chaque champ contextuel, les étapes suivantes :
- formatage du texte de base;
- segmentation du texte formaté;
- étiquetage et lemmatisation du texte segmenté;
- détection du sujet du texte étiqueté et lemmatisé;
- création du thésaurus du texte étiqueté et lemmatisé;
- construction d'une matrice de cooccurrence à partir du thésaurus du texte étiqueté et lemmatisé et du texte étiqueté et lemmatisé;
- construction d'une matrice de voisinage à partir de la matrice de cooccurrence et du thésaurus du texte étiqueté et lemmatisé;
- mise en oeuvre d'un algorithme de type Bron Kerbosch pour déterminer au moins une clique maximale de la matrice de voisinage;

Selon une caractéristique particulière, la création d'un champ contextuel d'un contenu courant appartenant au corpus comprend :
- une étape de comparaison d'un sujet du contenu courant avec un sujet du contenu à optimiser;
- lorsque le sujet du contenu courant diffère du sujet du contenu à optimiser, suppression du contenu courant du corpus ;

Selon une caractéristique particulière, l'étape de calcul du gap sémantique comprend les étapes suivantes :
- obtention d'une liste mots appartenant à l'ensemble des contenus du corpus ;
- obtention d'un thésaurus du contenu à optimiser, ledit thésaurus étant issu du champ contextuel du contenu à optimiser ;
- suppression de la liste des mots clefs, des mots contenus dans le thésaurus du contenu à optimiser délivrant une liste des mots nettoyée des mots de l'ensemble des contenus retenus ;
- obtention de la liste des thésaurus d'au moins un contenu du corpus ;
- à partir de la liste des mots nettoyée des mots de l'ensemble des contenus retenus, calcul d'au moins une occurrence de chaque mot dans la liste des thésaurus ;
- à partir de la liste des mots nettoyée des mots de l'ensemble des contenus retenus, filtrage des mots en fonction des occurrences obtenues précédemment et de la présence de ce mot dans champ contextuel du corpus dans son ensemble, délivrant un ensemble de mots constituant le gap sémantique.

Selon une caractéristique particulière, l'obtention des thésaurus consiste en la création de ceux-ci à partir d'un certain nombre de mots du contenu lui-même.

Selon une caractéristique particulière, le procédé est mis en oeuvre de manière continue sur un contenu à optimiser et d'un ensemble de contenus de référence, ledit contenu source et ledit contenu de référence évoluant dans le temps, de sorte que le gap sémantique soit régulièrement mis à jour.

Dans un autre mode de réalisation, la technique se rapporte également à un dispositif électronique de détermination d'une différence entre un contenu à optimiser et d'un ensemble de contenus de référence, lesdits contenus de référence étant réunis au sein d'un corpus. Un tel dispositif comprend des moyens de :
- création de champs contextuels, répartis en un champ contextuel du contenu à optimiser, au moins un champ contextuel correspondant à au moins un contenu de référence et un champ contextuel global obtenu à partir d'au moins un contenu de référence réuni au sein d'un contenu global, chaque champ contextuel comprenant au moins un ensemble de sommets deux-à-deux adjacents dénommé clique, chaque sommet comprenant un mot et chaque relation entre mot étant représentative d'une signification ;
- calcul d'un gap sémantique sur la base des champs contextuels créés.

Selon une implémentation préférée, les différentes étapes des procédés selon la technique proposée sont mises en oeuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de la technique proposée.

### 4. Figures

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée ;
- la figure 2 détaille la création des champs contextuels ;
- la figure 3 détaille le calcul du gap sémantique ;
- la figure 4 présente la structure d'un dispositif de communication.

### 5. Description

### 5.1. Rappels

Comme explicité précédemment, un objectif de la présente technique est d'enrichir le contenu d'une page pour optimiser le référencement naturel sur un mot clé donné (et donc permettre de trouver ce contenu de manière plus efficace). Pour ce faire on détermine une différence entre des mots d'un contenu à optimiser et des mots d'autres contenus (par exemple des contenus de concurrents qui sont mieux référencés). Les résultats obtenus par le biais des moteurs de recherche représentent la première source d'accès à un contenu (par exemple un site internet). Les moteurs de recherche évoluent constamment pour offrir des résultats répondants aux attentes. Ces évolutions passent par des algorithmes de recherche et les critères de classement des résultats. De leurs côté, les propriétaires des contenus souhaitent paraitre dans les premiers résultats de ces moteurs de recherche. Il est nécessaire, pour cela, que les propriétaires de contenus soient correctement référencés. Plutôt que d'utiliser des services d'experts en optimisation pour les moteurs de recherche (en Anglais « *Search Engine Optimization »),* les inventeurs ont eu l'idée d'une technique qui permette en quelque sorte de comprendre la signification du contenu (par exemple la signification d'un texte écrit sur une page HTML) et d'en déduire un certain nombre de mots clés à utiliser pour effectuer un référencement correct de ce contenu. Bien évidemment, pour être efficace, la technique comprend deux caractéristiques importantes : la première caractéristique consiste à se baser sur un contenu à priori similaire obtenu à partir d'une source concurrente. Par source concurrente, on entend source d'un concurrent ou d'un acteur similaire à celui souhaitant optimiser son référencement. La deuxième caractéristique consiste à classer, par ordre d'importance, les termes qui sont les plus représentatifs du contenu afin de déterminer les mots à insérer dans le contenu ou en entête du contenu pour augmenter son référencement.

Ainsi, la technique proposée permet d'obtenir des données plus pertinentes pour l'amélioration-optimisation d'un site internet ayant comme objectif un meilleur référencement par des moteurs de recherche. Pour résoudre ce problème, la méthode et le dispositif proposés délivrent une liste de mots jugés pertinents pour l'enrichissement sémantique d'un site.

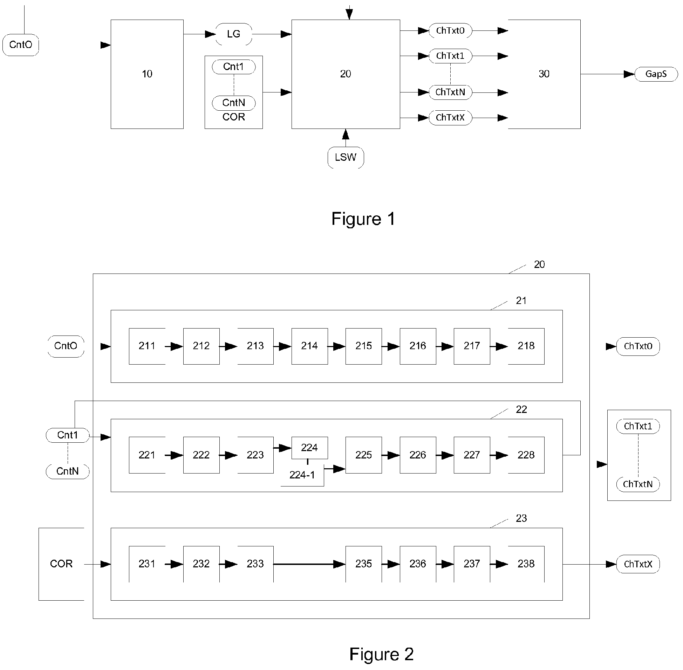

On décrit en relation avec la figure 1, les étapes mises en oeuvre par la méthode proposée. La méthode comprend deux étapes importantes que sont la création (20) de champs contextuels et le calcul (30) d'un gap sémantique (GapS) sur la base des champs contextuels (ChTxt) créés. Le calcul du gap sémantique délivre, en sortie, une liste de mots (Wds) absents du contenu étudié. La création des champs textuels est précédée d'une identification (10) de la langue étudiée (LG). Cette identification, qui n'est pas une étape essentielle de la technique décrite peut être mise en oeuvre de manière automatique, par exemple par l'intermédiaire d'un module ou d'un composant dédié. La langue peut également être sélectionnée manuellement et représenter un paramètre d'entrée de la création des champs textuels. Avantageusement, lorsque la langue est détectée de manière automatique, des valeurs de paramètres (voir infra), sont sélectionnées automatiquement pour alimenter les modules logiciels ou matériels de traitement (création des champs contextuels et/ou calcul du gap sémantique, liste des « StopWords »).

Les entrées principales de la méthode sont les suivantes :
- contenu à optimiser (CntO) : il s'agit du contenu à enrichir avec des mots issus de la méthode;
- corpus (COR) : il s'agit de l'ensemble de contenus (Cnt1,...,CntN), N étant le nombre de contenus, qui représentent la base de données textuelle utilisée par la méthode ;
- liste des "StopWords" (LSW) : il s'agit d'une liste pour chaque langue contenant des mots à éviter qui sont généralement très fréquents et qui polluent les résultats

Comme cela est précisé par la suite en référence à un mode de réalisation spécifique, des paramètres peuvent également être nécessaires, en fonction par exemple des modules ou composants utilisés.

L'identification (10) de la langue (LG) est réalisée sur la base du contenu à optimiser. Lorsque la langue (LG) est définie, elle est utilisée, en entrée de la création (20) des champs contextuels (ChTxt0, ChTxt1,...,ChTxtN, ChtTxtX). Pour créer ces champs contextuels, notamment, on utilise les contenus (CntO, Cnt1,...,CntN) et la liste des StopWords (LSW). Le champ contextuel du contenu à optimiser est noté ChTxt0. Les champs contextuels individuels des contenus du corpus sont respectivement notés ChTxt1,...,ChTxtN. Le champ contextuel ChtTxtX correspond au champ contextuel du contenu globalisé du corpus (ou des éléments du corpus qui ont été conservés à l'issue d'une sélection de ceux-ci basés en fonction de leurs sujets) : il s'agit de la fusion, en un seul contenu des contenus (sélectionnés) du corpus. Sur la base de ces champs contextuels (ChTxt0, ChTxt1,...,ChTxtN, ChtTxtX) et des thésaurus correspondants (les thésaurus sont des résultats intermédiaires obtenus lors de la création des champs contextuels), on effectue un calcul (30) du gap sémantique.

Dans un mode de réalisation spécifique, la méthode est mise en oeuvre pour permettre l'obtention de mots clés pertinents pour un contenu HTML à référencer. Il est bien entendu que ceci constitue un mode de réalisation spécifique et que la méthode décrite peut également être mise en oeuvre sur tout autre type de contenu comprenant du texte. Dans le cas de contenus HTML, la méthode est mise en oeuvre en prenant en entrée :
- le contenu de la page à étudier (la page sur laquelle on travaille). Elle permet d'affiner la liste de mots pour ne conseiller que des mots pertinents pour la page ;
- un corpus qui est dans ce cas un ensemble de pages web - généralement des pages de concurrents ou bien des pages ayant un bon classement dans les résultats naturels des moteurs de recherche ;
- liste brute des StopWords - lors de l'exécution de l'analyse sémantique, le programme traite tous les mots d'une manière similaire, sauf que certains de ces mots représentent une pollution pour les résultats finaux tels que les auxiliaires et certains adjectifs tels que "même", "autre" etc., on les appelle les "StopWords". Afin de ne pas prendre en compte ces mots, une liste nommée liste des "StopWords" est utilisée ; Cette liste comprend les mots les plus fréquents en se basant sur des tests d'exécution sous différents thèmes.

D'une manière générale, la méthode utilise un certain nombre de modules, qu'ils soient logiciels ou matériels, permettant de réaliser les différents calculs nécessaires à l'obtention du gap sémantique. Un tagger, notamment, est utilisé. Un tagger est un module étiqueteur Morphosyntaxique qui comprend un algorithme identifiant la nature des mots. L'étiquetage morphosyntaxique (aussi appelé étiquetage grammatical, POS tagging *(part-of-speech tagging)* en anglais) est le processus qui consiste à associer aux mots, phrases, données d'un texte les informations grammaticales correspondantes comme la partie du discours, le genre, le nombre etc. à l'aide d'un outil informatique. Un lemmatiseur est également utilisé : il rattache chaque forme normalisée à son entrée de dictionnaire à l'aide d'une liste de règles attachées à ce mot ou à un petit groupe de mots ayant des comportements syntaxiques similaires.

Ces modules utilisent notamment les paramètres suivants :
- fichiers de paramètre de l'étiqueteur : ces fichiers servent de base à l'étiquetage morphosyntaxique (processus qui consiste à associer aux mots leur nature grammaticale dans notre cas). Ces fichiers permettent avec leurs classes associées présentes dans l'algorithme de réaliser la lemmatisation et donc d'extraire les mots sous leur forme de lemme ;
- fichiers de paramètre de l'identificateur des langues : une liste de profiles pour l'identification de plusieurs langues (français, anglais, portugais, espagnol, italien, allemand, russe, bulgare, néerlandais, estonien, finnois, polonais, chinois, japonais, roumain).

En effectuant une analyse sémantique et en exécutant des algorithmes différents en fonction de trois entrées et de paramètres, les modules permettent de déterminer une liste de mots pertinents qui sont absents dans la page à étudier et suggère de les ajouter.

De manière générale, à l'aide du tagger et du corpus, on extrait des champs contextuels, un ensemble de cliques contextuelles (ensemble de mots ayant un lien sur le plan du contexte). D'abord, le champ pour une page constitué de l'union des différents pages du corpus, il permet d'extraire un dictionnaire de mots, ensuite les champs pour chaque page du corpus. Ainsi, en associant le dictionnaire et le champ pour chacune des pages, on peut ranger les mots par pertinence (inter occurrence). Ceci permet de ne sélectionner que les mots qui sont associés au contexte en utilisant une sorte de dictionnaire « mutualisé », ce dictionnaire étant la source des mots clés à ajouter. L'extraction des mots clés est effectuée en prenant en compte différents critères comme par exemple la position des mots dans le texte, la fréquence de ces mots. Ainsi, l'extraction des mots-clés est plus pertinentes

À l'aide du tagger et de la page étudiée, on récupère la liste de mots présents dans la page à l'aide de son champ contextuel.

En ne conservant que les mots présents dans la liste obtenue grâce au corpus et qui ne sont pas présents dans la liste obtenu grâce à la page étudiée, on obtient une nouvelle liste de mots qui peuvent être ajoutés aux mots dans la page étudiée.

Par ailleurs, en exploitant les données de sortie issues de la première étape (de détection de langue), on effectue plus aisément les différentes étapes nécessaires pour l'analyse sémantique afin de créer la liste des mots pertinents absents dans la page à étudier.

On rappelle, à toute fin utile, qu'une clique d'un graphe non-orienté est un sous-ensemble des sommets de ce graphe dont le sous-graphe induit est complet, c'est-à-dire que deux sommets quelconque de la clique sont toujours adjacents. Dans la présente technique, on s'intéresse particulièrement à la notion de clique maximale. Une clique maximale est une clique dont il n'est plus possible d'augmenter la taille en incluant l'un de ces vertex voisins. Cette notion de clique est importante pour la représentation contextuelle et donc l'obtention d'une « signification » du contenu.

### 5.2. Création des champs contextuels

Selon la technique proposée, la création des champs textuels est basée d'une part sur le contenu à optimiser (CntO), c'est à dire le contenu dont on souhaite qu'il soit plus efficacement référencé et d'autre part sur un ensemble de contenus de référence (ensemble de contenus de référence appelés "corpus", COR), comprenant par exemple des contenus de concurrents mieux référencés. L'étape de création (20) de champs textuels (ChTxt), décrite en relation avec la figure 2, comprend:
- création (21) d'un champ contextuel (ChTxt0) du contenu à optimiser (CntO);
- création (22) d'un champ contextuel (ChTxt1,..,N) de chaque élément du corpus COR, N représentant le nombre d'éléments du corpus; Un élément de corpus est un contenu particulier, choisi pour sa proximité avec le contenu à optimiser.
- création (23) d'un champ contextuel (ChTxtX) du corpus dans son ensemble.

D'une manière générale et générique, la création d'un champ contextuel (que ce soit celui du contenu à optimiser ou celui d'un élément du corpus), comprend les étapes suivantes:
- formatage (211, 221, 231) du texte de base;
- segmentation (212, 222, 232) du texte formaté;
- étiquetage et lemmatisation (213, 222, 233) du texte segmenté;
- détection (214, 242, 234) du sujet du texte étiqueté et lemmatisé ;.
- création (215, 225, 235) du thésaurus du texte étiqueté et lemmatisé;
- construction (216, 226, 236) d'une matrice de cooccurrence à partir du thésaurus du texte étiqueté et lemmatisé et du texte étiqueté et lemmatisé;
- construction (217, 227, 237) d'une matrice de voisinage à partir de la matrice de cooccurrence et du thésaurus du texte étiqueté et lemmatisé;
- mise en oeuvre (218, 228, 238) d'un algorithme de type Bron Kerbosch pour déterminer la ou les cliques maximales de la matrice de voisinage;

La ou les cliques maximales de la matrice de voisinage constituent, au sens de la présente technique, un champ contextuel d'un contenu. Ainsi, pour le contenu à optimiser (CntO), on obtient un champ contextuel (ChTxt0) comprenant au moins une clique.

La création d'un champ contextuel d'un élément du corpus comprend en outre, une étape de comparaison du sujet (224-1) de l'élément du corpus avec le sujet du contenu à optimiser. Si le sujet diffère, alors l'élément du corpus n'est pas retenu.

De manière similaire, lors de la création du champ contextuel du corpus dans son ensemble (23), on ne sélectionne pas les sujets, puisque par définition, les éléments du corpus traitent déjà du sujet correct car ils ont été présélectionnés pour cela : il en résulte une accélération de la procédure de traitement.

La création du champ contextuel du corpus (ChTxtX) est effectué sur l'ensemble des éléments du corpus retenus (i.e. dont les sujets correspondent - identiques ou similaires). L'ensemble des éléments retenus est alors considéré comme un seul et même contenu globalisé : selon l'invention, un tel contenu présente l'avantage de réunir fictivement tous les contenus, et donc de pouvoir déterminer des inter-occurrences de mots : ce sont les mots qui sont utilisés le plus fréquemment dans tous les contenus réunis. Ainsi, pour ce contenu globalisé, on obtient un champ contextuel comprenant au moins une clique. Outre le fait de disposer d'un dictionnaire (qui est donc contextuel, puisqu'il est lié à tous les contenus), on dispose donc d'un classement des occurrences de mots dans ce dictionnaire.

Pour exécuter ces étapes, on dispose d'un formateur de texte, d'une module de lemmatisation, d'une base de données de sujet (détaillée infra), et de divers paramètres, adaptés en fonction des besoins, comme par exemple la taille minimum d'un lemme, la taille minimum d'un texte etc..

### 5.3. Méthode de comparaison des sujets

Afin de s'assurer que le gap sémantique est calculé sur des contenus dont les sujets sont similaires, voire identiques, il est intéressant de comparer les sujets des contenus du corpus avec le sujet du contenu à optimiser. Ceci permet d'améliorer d'une part l'efficacité du futur référencement tout en limitant de manière intelligente les traitements à réaliser sur les différents contenus, ce qui est appréciable en termes de temps de réponse lors de la mise en oeuvre de la technique proposée.

La détection du sujet est réalisée en trois étapes. La première étape consiste à constituer une base de données comprenant différents sujets. Cette première étape est indépendante des deux étapes suivantes. La deuxième étape consiste à comparer et extraire un sujet de la base de données en fonction du contenu à optimiser. La troisième étape consiste, pour chaque contenu du corpus, à vérifier si ce contenu comprend un certain nombre de mot en commun avec le contenu à optimiser. Ainsi, on obtient, à partir d'un sujet de référence (celui de la base de données) qui correspond au sujet du contenu à optimiser, des contenus dont le sujet est sensiblement le même.

Plus particulièrement, les différentes étapes sont les suivantes :
*Étape #1 :* Création d'une base de données comprenant des sujets différents.
   - extraction de mots de la partie centrale de sources différentes (pages de sites internet, livres, fils de discussion, forum, réseaux sociaux, etc). On effectue la lemmatisation de mots de ces sources ; la partie centrale s'entend comme n'étant ni une préface, une conclusion, et pour un contenu en ligne, il ne s'agit pas d'un « header », d'un « footer », ou d'un « menu »)
   - pour chaque source, on crée un graphe non-orienté. Chaque noeud représente un mot extrait et chaque arête représente la relation entre deux mots ; cette relation est sensible au contexte de la phrase ; il en résulte que la relation à un sens ;
   - fusion des graphes non orientés qui ont un certain pourcentage de leurs noeuds en commun (par exemple entre 40% et 80%) afin de créer un graphe plus générique ; chaque graphe représente un "sujet" différent ;
*Étape #2 :* Obtention du sujet du contenu à optimiser ; cette étape est naturellement mise en oeuvre lors du traitement du contenu à optimiser (par exemple lors de la création de son champ contextuel) :
   - extraction des mots de la partie centrale du contenu à optimiser et lemmatisation de mots extraits ;
   - Recherche, au sein de la base de données, des mots extraits : le graphe non orienté de la base de données qui présente le nombre le plus élevé de mots en commun avec les mots extraits de client est sélectionné. Il constitue le graphe sujet du contenu à optimiser (Graphe A) ;
*Étape #3 :* Comparaison des sujets ; cette étape est naturellement mise en oeuvre lors des traitements successifs des contenus du corpus (par exemple lors de la création de leurs champ contextuel comme explicité précédemment) :
   - extraction, pour chaque contenu candidat, des mots de la partie centrale de ce contenu et lemmatisation de mots extraits ;
   - On cherche pour chaque contenu candidat si un certain pourcentage de leurs mots est dans le Graphe A (par exemple entre 40% et 80%) ; lorsque cette condition est réalisée, ce contenu fait partie des contenus retenus (qui traite le même sujet que le contenu étudié) ; lorsque la condition n'est pas remplie, ce contenu n'est pas pris en compte (ce n'est pas un contenu retenu) ; l'ensemble des contenus retenus sont les contenus qui ont au moins un certain pourcentage de ses mots dans le Graphe A, donc ces pages traitent le même sujet que notre page étudiée.

Le pourcentage de détermination de l'appartenance au sujet est compris entre 40% et 80%. Il s'agit d'un pourcentage qui est ajusté, au cas par cas, en fonction de plusieurs impératifs, dont notamment le temps de traitement nécessaire, le nombre de sujets de la base de données, le nombre de noeuds de graphe de la page étudiée. De bons résultats peuvent généralement être obtenus à partir d'un pourcentage d'environ 50%. Des résultats corrects sont obtenus à partir de 40%.

### 5.4. Calcul du gap sémantique

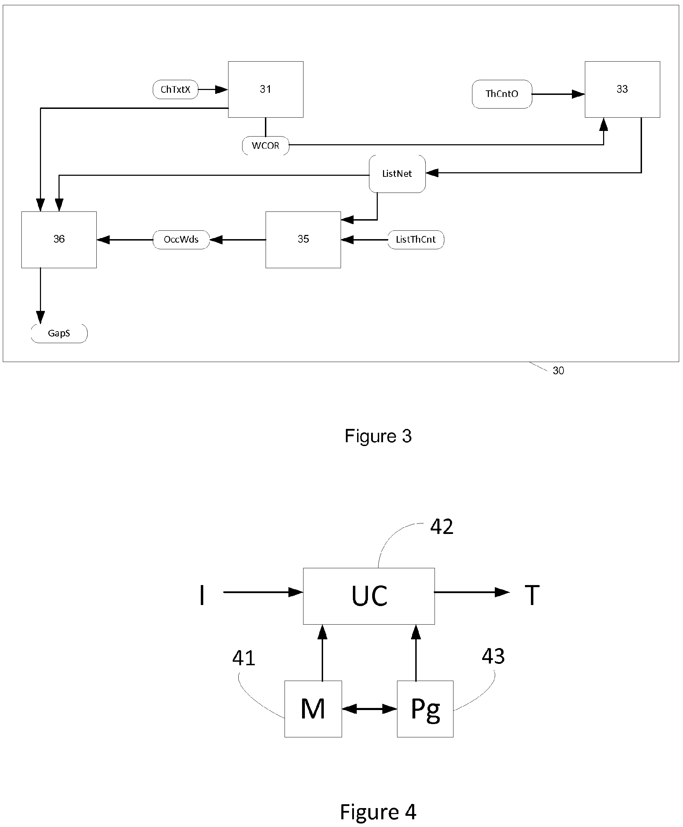

Sur la base des champs contextuels créés, le calcul du gap sémantique est alors réalisé. Ce calcul consiste en quelque sorte à effectuer une différence entre les champs sémantiques. Le calcul du gap sémantique, décrit en relation avec la figure 3, comprend les étapes suivantes :
- obtention (31) des mots de l'ensemble des éléments du corpus (WCOR) ; cette obtention peut par exemple consister en la récupération des mots des pages du corpus ; par exemple seuls les éléments du corpus qui ont été retenus lors de la détermination du sujet sont utilisés afin d'affiner le calcul ;
- obtention (32) du thésaurus (ThCntO) du contenu à optimiser (CntO) ; dans ce mode de réalisation le thésaurus est créé à partir du contenu à optimiser ;
- suppression (33), de la liste des mots de l'ensemble des éléments du corpus, des mots contenus dans le thésaurus du contenu à optimiser (CntO) délivrant une liste des mots nettoyée des mots de l'ensemble des contenus retenus (ListNet);
- obtention (34) de la liste des thésaurus de chaque contenu (retenu) du corpus (ListThCnt); dans ce mode de réalisation ces thésaurus sont créés à partir du contenu ;
- à partir de la liste des mots nettoyée des mots de l'ensemble des contenus retenus (ListNet), calcul (35) des occurrences (OccWds) de chaque mot dans l'ensemble des contenus retenus ; chaque mot de la liste des mots est comptabilisé parmi l'ensemble des mots de l'ensemble des contenus retenus; on obtient ainsi une liste des scores de chaque mot des contenus retenus ; la liste des scores peut être triée par contenu retenu ou par score global (i.e. score global d'un mot compte tenu de l'ensemble des contenus retenus) ;
- à partir de la liste des mots nettoyée des mots de l'ensemble des contenus retenus (ListNet), filtrage (36) des mots en fonction des occurrences obtenues (OccWds) précédemment d'une part et de la présence de ce mot dans le champ contextuel (ChTxtX) du corpus dans son ensemble (si le mot est présent dans une clique du champ contextuel) : si un mot n'est pas présent dans la clique du champ contextuel global, il n'est pas retenu comme étant un mot du gap sémantique; les mots restants sont conservés et trié par score ; ils constituent le gap sémantique au sens de la présente technique.

On obtient ainsi un gap sémantique, c'est-à-dire une liste des mots absents des mots du contenu à optimiser. Comme les mots ont été comptabilisés pour établir un score, ces mots peuvent être triés du plus fréquent au moins fréquent. Ainsi, en ajoutant ces mots aux éventuels mots existant déjà dans le contenu, il est aisé d'augmenter de manière efficace le référencement d'un contenu par un moteur de recherche.

### 5.5. Précisions sur les champs contextuels

Une condition importante pour la mise en oeuvre de la méthode décrite est de disposer de champs contextuels. Ces champs contextuels des contenus sont utilisés pour le calcul effectif du gap sémantique. Le champ contextuel d'un mot est l'ensemble des mots avec lequel il partage une relation de contexte. Ces mots ayant une relation de contexte entre eux sont appelés des contextonymes. L'obtention des contextonymes ne se fait pas à l'aide d'un dictionnaire, mais à l'aide d'une liste de mots initiaux (appelée thésaurus) : les mots-en-têtes qui permettent de récupérer les contextes importants et donc leur contextonymes. L'obtention de ces contextonymes s'effectue via des relations de cooccurrences dans une partie de texte. Dans le cas de la méthode décrite, cette partie de texte est une phrase.

### Création de thésaurus

Bien que l'espace contextuel n'utilise pas de dictionnaire, il utilise néanmoins un thésaurus. Cependant, ce thésaurus n'utilise pas de connaissance « externe » au processus. AU contraire, la génération du thésaurus est réalisée sur une connaissance « interne » au contenue. Ce thésaurus servant à récupérer par la suite les contextonymes. Afin de générer ce thésaurus à l'aide d'un texte, on effectue une analyse sémantique latente. Il s'agit d'un procédé de traitement des langues naturelles, dans le cadre de la sémantique vectorielle. L'analyse sémantique latente permet d'établir des relations entre un ensemble de documents et les termes qu'ils contiennent, en construisant des «concepts» liés aux documents et aux termes. Cette analyse comprend la création d'une matrice de cooccurrence, la réduction du rang de cette matrice grâce à la décomposition en valeurs singulières et puis la récupération d'espace de concepts. On rappelle qu'une matrice de cooccurrence permet de récupérer des relations d'occurrence des mots mais aussi d'établir les liaisons entre les différents éléments de l'espace (les différents noeuds d'un graphe représentant ces éléments).

Dans la méthode proposée, cette analyse est modifiée pour qu'elle puisse traiter un unique document et en retirer des concepts. Ainsi, cette modification consiste en un remplacement d'un des éléments d'entrée de l'analyse : les documents deviennent des phrases. De plus pour prendre en compte ce remplacement, l'établissement des concepts s'effectue en réalisant un partitionnement. Ce partitionnement, à la différence de celui d'analyse normale, prend en compte une notion de pondération des mots des textes.

À l'issue de cette analyse, on obtient des partitions de termes qui correspondent à des concepts. De ces concepts, on extrait le thésaurus.

### Modules mis en oeuvre pour l'obtention d'un champ contextuel

Pour l'obtention d'un champ contextuel, selon la technique décrite, il est fait appel aux modules suivants :
- l'étiqueteur Morphosyntaxique (Tagger) : Un algorithme qui identifie la nature des mots. L'étiquetage morphosyntaxique (aussi appelé étiquetage grammatical, POS tagging (part-of-speech tagging) en anglais) est le processus qui consiste à associer aux d'un texte les informations grammaticales correspondantes comme la partie du discours, le genre, le nombre etc. à l'aide d'un outil informatique. Pour notre cas, l'information retenue est la nature grammaticale en vue de pouvoir réaliser la lemmatisation.
- le lemmatiseur : il rattache chaque forme normalisée à son entrée de dictionnaire à l'aide d'une liste de règles attachées à ce mot ou à un petit groupe de mots ayant des comportements syntaxiques similaires.
   Plus spécifiquement, la lemmatisation désigne l'analyse lexicale du contenu d'un texte regroupant les mots d'une même famille. Chacun des mots d'un contenu se trouve ainsi réduit en une entité appelée lemme (forme canonique). C'est une étape importante dans le traitement naturel du langage car cela permet de travailler sur les mots et ainsi limités les problèmes liées aux flexions des mots tout en gardant plus d'informations qu'en réalisant une simple racinisation (obtention de racine de mot).
   Cette lemmatisation peut par exemple être réalisée à l'aide du générateur d'analyse lexical JFlex. Cette analyse permet à partir de la nature d'un mot et de l'ordre des lettres qui le composent pour réaliser un traitement sur celui-ci. Ainsi, il permet de réaliser la lemmatisation des noms et des adjectifs. En ce qui concerne les verbes, une racinisation est effectués pour les verbes du premier et du deuxième groupe tandis que pour ceux du troisième groupe, on réalise une lemmatisation à l'aide d'un dictionnaire contenant les verbes les plus utilisés.
- calculs Matriciels : différentes opérations matricielles telles que "Décomposition en valeurs singulières d'une matrice" et "Décomposition matricielle" sont effectuées.

La récupération d'un champ contextuel nécessite un texte. Le processus de réalisation de cet espace est le suivant :
- transformation du texte sous forme canonique, après étiquetage des mots et lemmatisation de ceux-ci.
- à partir de ce texte « canonique », récupération du thésaurus de contextonymes à tester et servant à récupérer l'espace des contextes.
- à partir du thésaurus, construction d'une matrice de cooccurrence prenant en compte la cooccurrence des mots sur une phrase et le nombre d'occurrence de ce mot dans le texte.
- à partir de cette matrice de cooccurrence et en utilisant l'algorithme de Bren-Kerbosch, récupération de la ou des cliques de longueur maximum et, donc, de l'espace des contextes (appelé champ contextuel).

### 5.6. Dispositifs de mises en oeuvre.

On décrit, en relation avec la figure 4, un dispositif de traitement comprenant des moyens permettant l'exécution du procédé décrit préalablement.

Par exemple, le dispositif de traitement comprend une mémoire 41 constituée d'une mémoire tampon, une unité de traitement 42, équipée par exemple d'un microprocesseur, et pilotée par le programme d'ordinateur 43, mettant en oeuvre les étapes nécessaires au traitement d'indexation permettant l'obtention des mots clés de référencement.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée par exemple un ensemble de lexèmes initiaux ou des données de dictionnaires existant. Le microprocesseur de l'unité de traitement 42 met en oeuvre les étapes du procédé, selon les instructions du programme d'ordinateur 43 pour permettre l'obtention de mots clés de référencement.

Pour cela, le dispositif de traitement comprend, outre la mémoire tampon 41, des moyens d'obtention d'une information externe au dispositif, comme un ensemble de données accessibles en base ; ces moyens peuvent se présenter sous la forme d'un module d'accès à un réseau de communication tel qu'une carte réseau. Le dispositif comprend également des moyens de traitement, de ces données pour délivrer des données permettant l'accès à un dispositif de vérification ; ces moyens de traitement comprennent par exemple un processeur spécialisé dans cette tâche ; le dispositif comprend également un ou plusieurs moyens d'accès à une ou plusieurs bases de données. Le dispositif comprend également des moyens de mises à jour d'autorisation et/ou d'accès à des biens ou des services, notamment des moyens de pondération de relations entre les formes lexicales et/ou grammaticales composant le dictionnaire.

Ces moyens peuvent être pilotés par le processeur de l'unité de traitement 42 en fonction du programme d'ordinateur 43.

## Revendications

1. Procédé, mis en oeuvre par l'intermédiaire d'un dispositif électronique, de détermination d'une différence entre un contenu à optimiser (CntO) et un ensemble de contenus de référence (Cnt1,..., CntN), lesdits contenus de référence étant réunis au sein d'un corpus (COR),
procédé **caractérisé en ce qu'**il comprend :
- la création (20) de champs contextuels (ChTxt0, ChTxt1,...,ChTxtN, ChtTxtX), répartis en un champ contextuel (ChTxt0) du contenu à optimiser (CntO), au moins un champ contextuel (ChTxt1,...,ChTxtN) correspondant à au moins un contenu de référence (Cnt1,..., CntN) et un champ contextuel global (ChtTxtX) obtenu à partir d'au moins un contenu de référence (Cnt1,..., CntN) réuni au sein d'un contenu global, chaque champ contextuel (ChTxt0, ChTxt1,...,ChTxtN, ChtTxtX) comprenant au moins un ensemble de sommets deux-à-deux adjacents dénommé clique, chaque sommet comprenant un mot et chaque relation entre mot étant représentative d'une signification ;
- le calcul (30) d'un gap sémantique (GapS) sur la base des champs contextuels (ChTxt0, ChTxt1,...,ChTxtN, ChtTxtX) créés.

2. Procédé de détermination selon la revendication 1, **caractérisé en ce qu'**il comprend, préalablement à l'étape de création (20) des champs contextuels (ChTxt0, ChTxt1,...,ChTxtN, ChtTxtX), une étape de détection d'une langue (LG) dudit contenu à optimiser (CntO), ladite étape de détection délivrant en outre une pluralité de paramètres de création des champs contextuels.

3. Procédé de détermination selon la revendication 1, **caractérisé en ce que** l'étape de création (20) comprend les étapes suivantes :
- création (21) du champ contextuel (ChTxt0) du contenu à optimiser (CntO) ;
- création (22) du champ contextuel (ChTxt1,..,N) de chaque élément du corpus (COR), N représentant le nombre d'éléments du corpus ;
- création (23) du champ contextuel (ChTxtX) du corpus dans son ensemble.

4. Procédé, selon la revendication 3, **caractérisé en ce que** la création des champs contextuels (ChTxt0, ChTxt1,...,ChTxtN, ChtTxtX) comprend, pour chaque champ contextuel, les étapes suivantes :
- formatage (211, 221, 231) du texte de base;
- segmentation (212, 222, 232) du texte formaté;
- étiquetage et lemmatisation (213, 223, 233) du texte segmenté;
- détection (214, 224, 234) du sujet du texte étiqueté et lemmatisé;
- création (215, 225, 235) du thésaurus du texte étiqueté et lemmatisé;
- construction (216, 226, 236) d'une matrice de cooccurrence à partir du thésaurus du texte étiqueté et lemmatisé et du texte étiqueté et lemmatisé;
- construction (217, 227, 237) d'une matrice de voisinage à partir de la matrice de cooccurrence et du thésaurus du texte étiqueté et lemmatisé;
- mise en oeuvre (218, 228, 238) d'un algorithme de type Bron Kerbosch pour déterminer au moins une clique maximale de la matrice de voisinage;

5. procédé selon la revendication 4, **caractérisé en ce que** la création d'un champ contextuel d'un contenu courant (Cnt1,..., CntN) de l'ensemble de contenus de référence (Cnt1,..., CntN) appartenant au corpus COR comprend :
- une étape de comparaison d'un sujet du contenu courant (Cnt1,..., CntN) avec un sujet du contenu à optimiser (CntO) ;
- lorsque le sujet du contenu courant diffère du sujet du contenu à optimiser, suppression du contenu courant du corpus.

6. Procédé selon la revendication 1, **caractérisé en ce que** l'étape de calcul du gap sémantique comprend les étapes suivantes :
- obtention (31) d'une liste mots (WCOR) appartenant à l'ensemble des contenus du corpus (COR) ;
- obtention (32) d'un thésaurus (ThCntO) du contenu à optimiser (CntO), ledit thésaurus (ThCntO) étant issu du champ contextuel (ChTxt0) du contenu à optimiser (CntO) ;
- suppression (33), de la liste des mots (WCOR), des mots contenus dans le thésaurus (ThCntO) du contenu à optimiser (CntO) délivrant une liste des mots nettoyée des mots clefs de l'ensemble des contenus retenus (ListNet) ;
- obtention (34) de la liste des thésaurus (ListThCnt) d'au moins un contenu du corpus (COR) ;
- à partir de la liste des mots nettoyée des mots de l'ensemble des contenus retenus (ListNet), calcul (35) d'au moins une occurrence (OccWds) de chaque mot dans la liste des thésaurus (ListThCnt) ;
- à partir de la liste des mots nettoyée des mots de l'ensemble des contenus retenus (ListNet), filtrage (36) des mots en fonction des occurrences obtenues (OccWds) précédemment et de la présence de ce mot dans champ contextuel (ChTxtX) du corpus dans son ensemble, délivrant un ensemble de mots constituant le gap sémantique.

7. Procédé selon l'une quelconque des revendications 1 à 6, **caractérisé en ce qu'**il est mis en oeuvre de manière continue sur un contenu à optimiser (CntO) et un ensemble de contenus de référence (Cnt1,..., CntN), ledit contenu source et ledit contenu de référence évoluant dans le temps, de sorte que le gap sémantique soit régulièrement mis à jour.

8. Dispositif électronique de détermination d'une différence entre un contenu à optimiser (CntO) et un ensemble de contenus de référence (Cnt1,..., CntN), lesdits contenus de référence étant réunis au sein d'un corpus (COR),
dispositif **caractérisé en ce qu'**il comprend des moyens de :
- création (20) de champs contextuels (ChTxt0, ChTxt1,...,ChTxtN, ChtTxtX), répartis en un champ contextuel (ChTxt0) du contenu à optimiser (CntO), au moins un champ contextuel (ChTxt1,...,ChTxtN) correspondant à au moins un contenu de référence (Cnt1,..., CntN) et un champ contextuel global (ChtTxtX) obtenu à partir d'au moins un contenu de référence (Cnt1,..., CntN) réuni au sein d'un contenu global, chaque champ contextuel (ChTxt0, ChTxt1,...,ChTxtN, ChtTxtX) comprenant au moins un ensemble de sommets deux-à-deux adjacents dénommé clique, chaque sommet comprenant un mot et chaque relation entre mot étant représentative d'une signification ;
- calcul (30) d'un gap sémantique (GapS) sur la base des champs contextuels (ChTxt0, ChTxt1,...,ChTxtN, ChtTxtX) créés.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1, lorsqu'il est exécuté sur un processeur.
